# FASCICULE DE BREVET EUROPEEN

(11) **EP 0 644 631 B1**
(45) Date de publication et mention de la délivrance du brevet: **01.04.1998**
(21) Numéro de dépôt: 94402048.6
(22) Date de dépôt: 14.09.1994
(51) Int. Cl.: H01R 39/34

(54) **Collecteur rapporté pour alternateur notamment de véhicule automobile**
Kollektor für Wechselstromgenerator hauptsächlich für Kraftfahrzeuge
Collector for alternator especially for motor vehicles

(30) Priorité: 16.09.1993 FR 9311041
(43) Date de publication de la demande: 22.03.1995
(73) Titulaire: VALEO EQUIPEMENTS ELECTRIQUES MOTEUR, 94000 Créteil (FR)
(72) Inventeur: Rondier, Patrick, F-95360 Montmagny (FR)
(74) Mandataire: Martin, Jean-Jacques

(56) Documents cités:
- EP-A- 0 094 163
- GB-A- 1 416 444
- GB-A- 2 091 497
- US-A- 2 157 007

## Description

La présente invention concerne d'une façon générale le raccordement d'extrémités de fils sur des éléments de connexion, notamment dans le cadre de la connexion d'un bobinage d'excitation à des bagues collectrices dans un alternateur de véhicule automobile, et concerne plus particulièrement une nouvelle combinaison d'un fil et d'un élément de connexion formant pince-fil pour le maintien de celui-ci au cours d'une étape ultérieure de soudage, notamment soudage électrique.

Classiquement, un élément de connexion pour extrémité de fil peut comprendre deux pattes ou languettes en vis-à-vis entre lesquelles le fil est positionné, en vue du pincement de celui-ci lorsque les deux languettes sont rapprochées l'une de l'autre. Un tel élément de connexion peut également comprendre un ou plusieurs trous dans lesquels l'extrémité de fil est engagée en vue de son soudage.

Ces éléments de connexion connus souffrent cependant d'un certain nombre d'inconvénients. Ainsi, dans le cas d'un pince-fil, il s'avère difficile d'assurer de façon fiable le maintien du fil entre les deux languettes en vue du soudage. Dans le cas des éléments de connexion à trou(s) de passage de fil, la mise en place de l'extrémité du fil est fastidieuse, notamment dans le cas où l'accès à l'élément de connexion est difficile.

Plus généralement, il s'avère extrêmement difficile avec les éléments de connexion connus de réaliser une mise en place fiable d'une extrémité de fil à l'aide de moyens robotisés.

C'est le cas du document US-2 157 007. Par ailleurs, le document EP-0 094 163 A1 présente un élément de connexion avec un fil conducteur mais ne décrit pas leur agencement relatif.

La présente invention vise à pallier ces inconvénients. Elle propose à cet effet une combinaison d'un fil et d'un élément de connexion pour une extrémité du fil selon la revendication 1.

Des aspects préférés, mais non limitatifs, de la combinaison selon l'invention, sont les suivants:
- chacune des deux pattes comporte une encoche.
- la ou chaque encoche est de forme semi-circulaire.
- ladite première partie de l'extrémité de fil termine celle-ci, et ledit canal est évasé d'un bord latéral des pattes ne comportant pas d'encoche vers un bord latéral opposé desdites pattes, comportant la ou chaque encoche.
- l'élément présente, en section transversale au canal, un profil en forme de "U".
- chaque patte comporte, sur sa face tournée vers l'intérieur du canal, un bossage.

L'invention concerne en outre une combinaison d'un fil et d'un conducteur rigide selon la revendication 7.

L'invention concerne également un collecteur rapporté pour alternateur notamment de véhicule automobile, du type réalisé par surmoulage de matière isolante sur des éléments électriquement conducteurs, et comprenant une première partie généralement cylindrique comportant à sa surface extérieure deux bagues collectrices, une deuxième partie comportant deux éléments de connexion avec les extrémités de fils d'un bobinage, et une partie intermédiaire de liaison électrique et mécanique entre les première et deuxième parties, comprenant deux bras constitués chacun d'une partie conductrice de liaison entre bague et élément de connexion noyée dans la matière isolante, caractérisé en ce qu'il comprend deux combinaisons d'un fil et d'un élément de connexion telle que définie ci-dessus ou deux combinaisons d'un fil et d'un conducteur rigide telle que définie ci-dessus.

Enfin l'invention propose un alternateur notamment pour véhicule automobile, caractérisé en ce qu'il comporte sur un arbre en saillie un collecteur rapporté tel que défini ci-dessus.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue en coupe axiale, selon la ligne I-I de la figure 4, d'une pièce destinée à former un collecteur pour alternateur selon l'invention,
la figure 2 est une vue en bout selon la flèche II de la figure 1,
la figure 2a est une vue à échelle agrandie d'une partie de la figure 2,
la figure 3 est une vue en coupe transversale selon la ligne III-III de la figure 1,
la figure 4 est une vue en bout selon la flèche IV de la figure 1,
la figure 5 est une vue en coupe axiale selon la ligne V-V de la figure 4,
la figure 6 est une vue en élévation selon la flèche VI de la figure 4,
la figure 7 est une vue en perspective arrachée de la pièce des figures 1 à 6,
la figure 8 est une vue en perspective non arrachée de la pièce des figures 1 à 7,
la figure 9 est une vue en perspective de la pièce des figures 1 à 8 terminée et montée sur un alternateur,
la figure 10 est une vue en coupe axiale verticale d'une partie d'un premier type d'alternateur équipé de la pièce des figures 1 à 8, et
la figure 11 est une vue en coupe axiale verticale d'une partie d'un deuxième type d'alternateur équipé de la pièce des figures 1 à 8.

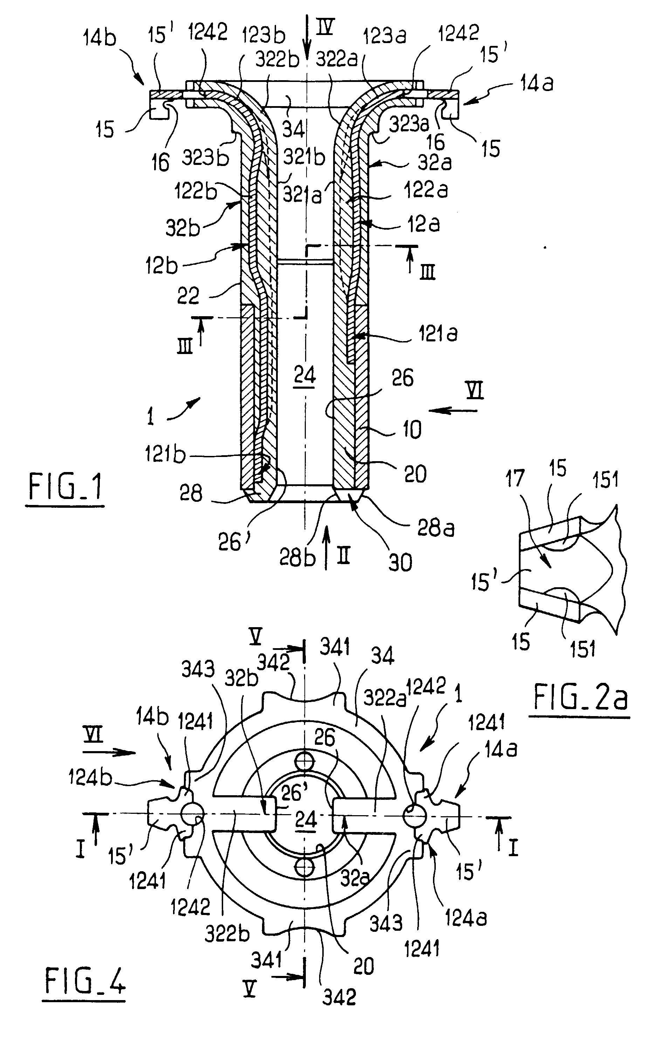

En référence tout d'abord aux figures 1 à 8, on a représenté une pièce formant collecteur pour alternateur, à une étape intermédiaire de sa fabrication.

La pièce, globalement indiquée en 1, est réalisée par surmoulage de matière plastique, de préférence thermodurcissable, sur des parties conductrices, par exemple en cuivre, destinées à former de première part deux bagues cylindriques de contact avec des balais, de deuxième part deux éléments de connexion avec deux extrémités d'un bobinage de rotor de l'alternateur, et de troisième part deux éléments de liaison électrique entre les deux bagues et les deux éléments de connexion.

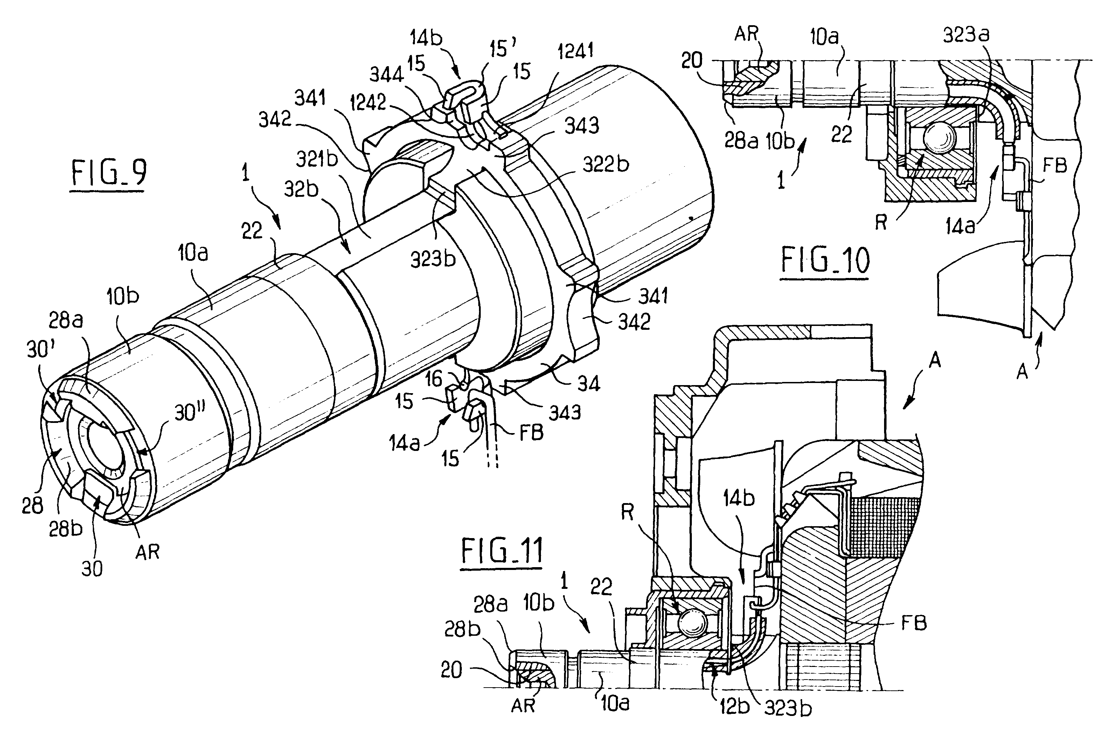

De façon conventionnelle, les bagues cylindriques sont initialement constituées d'un cylindre creux unique 10 en cuivre qui, à la fin de la réalisation de la pièce, est tronçonné circulairement sur toute son épaisseur dans sa région médiane pour former les deux bagues 10a, 10b électriquement isolées l'une de l'autre (figure 9).

Les éléments de connexion, respectivement 14a, 14b, comprennent deux pattes en vis-à-vis 15, 15 qui définissent entre elles un canal central évasé 17 et qui sont reliées entre elles par une partie 15' en forme de secteur de tronc de cône, définissant le fond du canal. Ce canal est destiné à recevoir une extrémité du bobinage. L'élément de liaison associé, respectivement 12a, 12b, s'étend radialement vers l'intérieur à partir du côté le plus étroit de la partie 15.

Chaque patte 15 présente, dans la région du fond du canal et sur son bord tourné radialement vers l'intérieur, une encoche en l'espèce semi-circulaire 16.

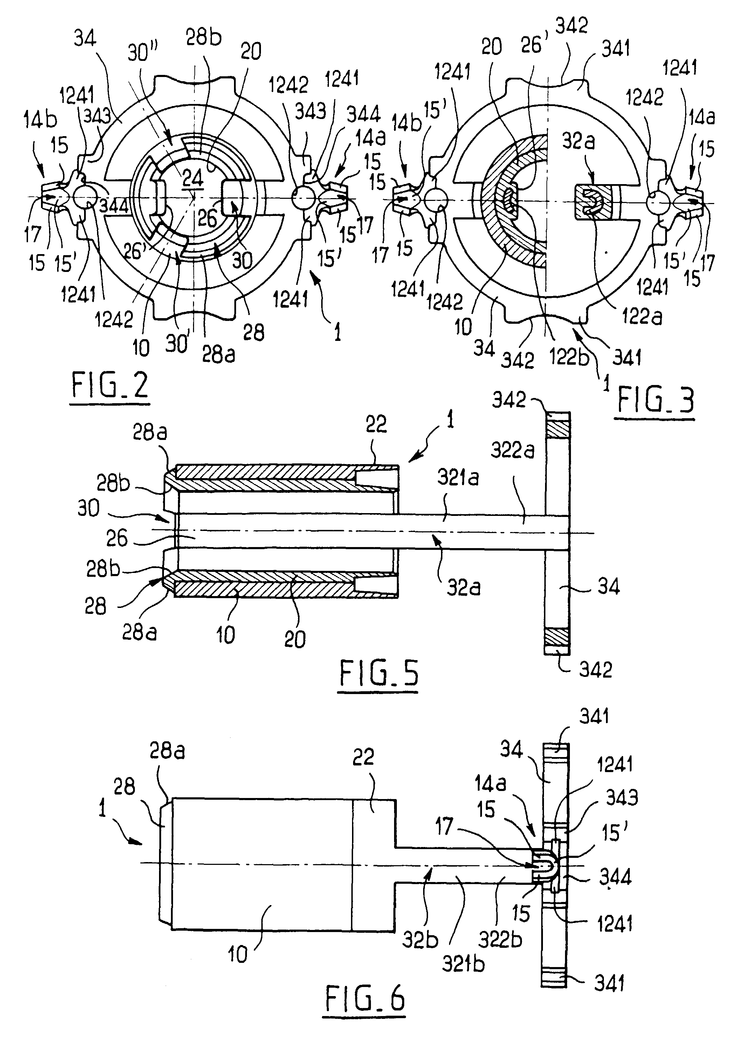

En outre, comme on le voit mieux sur la figure 2a, chaque patte 15 présente sur sa face intérieure un bossage généralement arrondi 151, réalisé de préférence par emboutissage, à des fins expliquées plus loin.

La figure 9 illustre l'extrémité d'un fil de bobinage FB qui a été mise en place dans l'élément de connexion 14a, la pièce 1 occupant en l'espèce une position angulaire telle que les deux élements de connexion 14a, 14b soient alignés verticalement. Le fil est coudé sur 180° et son extrémité libre, descendante, est engagée dans le canal défini entre les pattes 15, tandis que son coude vient se loger dans l'une des encoches 16.

Ensuite, un sertissage ou pincement est réalisé en rapprochant à l'aide d'un outil les deux pattes 15, qui viennent pincer la partie d'extrémité libre du fil, cette étape étant suivie par un soudage par exemple électrique. On observera que la présence des bossages 151 permet, dans le cadre d'une connexion automatisée, de détecter facilement le degré de pincement des fils adéquat pour qu'ensuite l'opération de soudage électrique s'effectue de façon satisfaisante. Plus précisément, les bossages permettent d'éviter qu'au cours du pincement les bords vifs des pattes 15 ne viennent sectionner le fil.

La construction de l'élément de connexion tel que 14a présente de nombreux avantages.

Tout d'abord, la forme évasée du canal délimité par les pattes 15 et le fond 15' exerce un effet de guidage lors de l'introduction de l'extrémité libre du fil. Cette forme évasée permet par ailleurs, du fait que le canal 17 présente sa largeur la plus grande au niveau de la liaison de l'élément 14a ou 14b avec le reste de la pièce métallique, de limiter les phénomènes de striction lors du pliage des pattes 15 pour exercer le pincement.

Ensuite, avant le pincement à l'aide des pattes 15, l'encoche 16 qui reçoit la région coudée du fil assure une stabilisation du fil dans la position illustrée sur la figure 9, en empêchant en particulier celui-ci de se dégager du canal par son côté ouvert.

Enfin, les pattes 15 assurent un pincement ferme mais non tranchant du fil, pour assurer une bonne tenue mécanique avant l'étape de soudage.

On observera ici qu'un élément pince-fil tel que décrit ci-dessus peut tout à fait s'appliquer à des domaines autres que celui de la connexion électrique d'un collecteur à un bobinage d'alternateur.

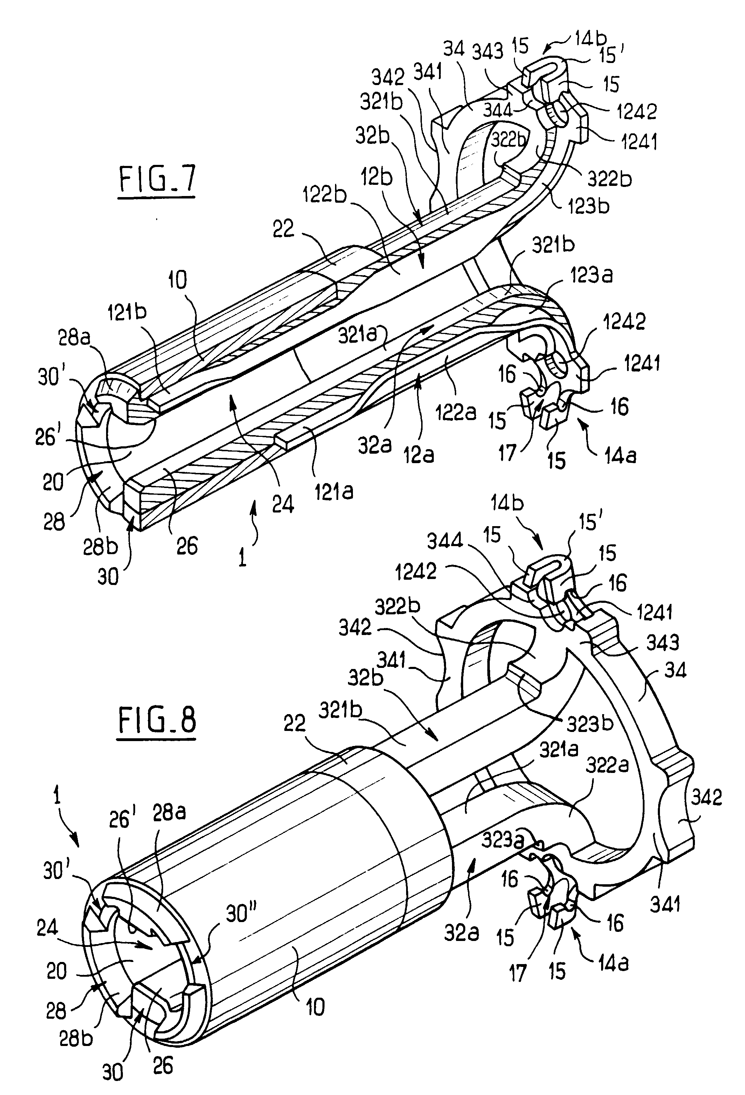

Enfin les éléments de liaison 12a, 12b comprennent chacun une partie en forme de portion de cylindre, respectivement 121a, 121b, soudée sur la face intérieure de la partie 10 destinée à former les bagues, une première partie intermédiaire généralement droite, respectivement 122a, 122b, dont la section est en forme de U au moins sur une partie substantielle de sa longueur (voir en particulier figure 3, partie de droite, et figure 7), et décalée radialement vers l'intérieur par rapport à la partie associée respective 121a, 121b, et une deuxième partie intermédiaire, de section plate, courbée sur un angle d'environ 90°, respectivement 123a, 123b, dont l'extrémité orientée radialement se prolonge dans l'élément de connexion respectif 14a, 14b. Les variations de profil des parties 121a-123a et 121b-123b s'effectuent progressivement.

On observera ici que les parties 121a, 121b sont soudées à la partie 10 respectivement dans sa région proche et dans sa région éloignée des éléments de liaison 12a, 12b, de telle manière qu'après le tronçonnage précité, l'élément de connexion 14a soit uniquement relié à la bague 10a, et que l'élément de connexion 14b soit uniquement relié à la bague 10b.

On notera également que la section en U des parties intermédiaires droites permet d'accroitre la rigidité de celles-ci, afin de minimiser tout risque d'écart de positionnement intempestif au cours de l'étape de surmoulage, et en particulier d'éviter tout risque de court-circuit entre la partie du cylindre 10 qui deviendra la bague intérieure 10a et la partie intermédiaire adjacente 122b.

On observe en outre que chaque partie intermédiaire courbe 123a, 123b comporte, au voisinage de l'élément de connexion respectif 14a, 14b, une région plus large, respectivement 124a, 124b, définissant deux pattes latérales d'ancrage 1241 et dans laquelle est formé un trou traversant circulaire 1242. Ce trou est destiné à coopérer avec des aménagements (fixes ou mobiles) du moule de manière à précisément positionner les éléments de connexion 14a, 14b au cours de l'étape de surmoulage.

On va maintenant décrire la partie en matière plastique obtenue après l'étape de surmoulage des parties conductrices précitées.

On trouve tout d'abord une partie 20 de forme générale cylindrique, qui s'étend à l'intérieur du cylindre en cuivre 10 en recouvrant entièrement sa face intérieure ainsi que les plaquettes conductrices 121a, 121b et les tronçons des parties intermédiaires 122a, 122b situées à l'intérieur dudit cylindre. Ce cylindre 20 est prolongé, en direction des éléments de connexion 14a, 14b par une autre partie cylindrique 22 dont la surface extérieure vient en affleurement avec la surface extérieure du cylindre en cuivre 10.

Les parties 20, 22 définissent un alésage cylindrique central 24 pourvu sur toute sa longueur de deux cannelures 26, 26' de section généralement rectangulaire, diamétralement opposées et occupant les mêmes positions angulaires, par rapport à l'axe de la pièce, que les éléments de connexion 14a, 14b.

Cet alésage cannelé est destiné à recevoir un arbre, de forme complémentaire, de l'alternateur, sur lequel la pièce 1 est emmanchée à force.

Du côté opposé à la partie cylindrique 22, la partie cylindrique 20 se prolonge par une petite collerette 28 à bords extérieur et intérieur biseautés, respectivement 28a et 28b. Entre le bord extérieur biseauté 28a et le cylindre en cuivre 10, la partie 28 présente une surface cylindrique légèrement en retrait de la surface extérieure dudit cylindre 10.

Dans cette partie 28 sont ménagées trois encoches 30, 30' et 30'' dont la profondeur est égale à la longueur de la partie 28 en direction axiale, c'est-à-dire que le fond de ces encoches laisse apparaître le bord du cylindre en cuivre.

L'une de ces trois encoches 30 est alignée sur la cannelure inférieure 26, tandis que les deux autres, 30' et 30", sont décalées angulairement en l'espèce de 120° de part et d'autre de l'encoche 30.

On comprend que le cylindre en cuivre 10 est fermement emprisonné en direction axiale entre les parties 22, 28 en matière plastique.

Les encoches 30, 30', 30'' ont un double rôle. Tout d'abord, l'emmanchement à force de la pièce 1 sur l'arbre de l'alternateur s'effectue, par exemple de manière automatisée, en exerçant un effort axial très important sur la pièce 1 du côté de la partie 28. Les encoches 30, 30', 30'' sont destinées à recevoir trois doigts de pression de l'automate, qui de la sorte vont exercer l'effort sur la pièce en agissant non pas sur ses parties en matière plastique, mais sur le bord, tourné vers la partie 28, du cylindre métallique 10. De la sorte, cet effort est exercé sans risque de détérioration de la matière plastique de la pièce, dont la résistance mécanique est bien entendu nettement inférieure à celle du cuivre.

En outre, les encoches 30, 30', 30'' permettent d'assurer un détrompage quant au positionnement angulaire de la pièce 1 sur l'alternateur avant son emmanchement.

On notera ici que les deux extrémités du bobinage de rotor de l'alternateur correspondent respectivement à un côté intérieur du bobinage ("entrée de courant") et à un côté extérieur du bobinage ("sortie de courant").

Dans la technique antérieure, on connectait l'une de ces extrémités de fils indifféremment à l'une des bagues 10a, 10b, et l'autre extrémité à l'autre bague.

Il a cependant été constaté que le comportement de l'alternateur en présence de perturbations électromagnétiques rayonnées par exemple par les émissions radio, et tout particulièrement dans la bande de la modulation de fréquence, était influencé de façon significative par la façon dont les extrémités du bobinage d'excitation étaient raccordées aux potentiels fournis par le circuit régulateur de l'alternateur. Plus précisément, on va faire en sorte que l'extrémité intérieure du bobinage (la plus proche de l'arbre de l'alternateur, correspondant au début du bobinage lors de sa confection) soit raccordée à la borne du régulateur qui délivre un potentiel fixe, correpondant à l'une bien déterminée des bagues 10a, 10b tandis que la borne du régulateur délivrant le potentiel variable, correspondant à l'autre bague du collecteur, sera raccordée à l'extrémité extérieure du bobinage (fin du bobinage).

Les encoches 30, 30', 30'' permettent de réaliser l'appairement de ces raccordements, la position angulaire correcte de la pièce 1, parmi ses deux positions possibles décalées de 180°, étant déterminée par exemple au moyen d'un ou plusieurs palpeurs associés à l'équipement robotisé de montage, ou encore visuellement lors d'opérations manuelles.

La pièce 1 après surmoulage comprend en outre deux branches en matière plastique 32a, 32b dans lesquelles sont entièrement noyées les parties conductrices de raccordement 122a, 123a et 122b, 123b, respectivement, et une partie en forme d'anneau 34 d'axe confondu avec celui des parties cylindriques 10, 20, 22, reliée à ces parties par lesdites branches et se situant au niveau des éléments de connexion 14a, 14b.

Plus précisément, chaque branche 32a, 32b comprend un tronçon rectiligne, respectivement 321a, 321b, et un tronçon courbé sur 90°, respectivement 322a, 322b, épousant la forme des parties intermédiaires courbes 123a, 123b en matériau conducteur.

Les branches 32a, 32b viennent se raccorder radialement et en des positions diamétralement opposées à l'anneau 34, au niveau des éléments de connexion 14a, 14b.

On observe que chaque branche 32a, 32b, dans la région de transition entre son tronçon rectiligne et son tronçon courbé, présente un décrochement vers l'extérieur noté respectivement 323a, 323b.

La face intérieure de chaque tronçon rectiligne 321a, 321b se situe dans le prolongement, en direction axiale, de la face intérieure d'une cannelure 26, 26' de l'alésage 24, tandis que la face extérieure de chaque tronçon rectiligne présente un profil en forme d'arc de cercle et se situe dans le prolongement, en direction axiale, de la face externe de la partie 22.

L'anneau 34 comporte, en deux positions diamétralement opposées et décalées de 90° par rapport aux éléments de connexion 14a, 14b, deux surépaisseurs 341 dirigées vers l'extérieur, et dans la surface externe desquelles sont formés respectivement deux renfoncements légèrement concaves 342.

Deux autres surépaisseurs 343, également dirigées vers l'extérieur, sont formées dans l'anneau 34 au niveau des éléments de connexion 14a, 14b, de manière à emprisonner partiellement les pattes d'ancrage 1241. Dans ces surépaisseurs 343 sont également formés respectivement deux renfoncements 344 permettant de laisser les trous circulaires 1242 dégagés.

La réalisation de l'anneau 34 au cours de l'étape de surmoulage permet de rigidifier la pièce 1 dans la région des éléments de connexion 14a, 14b, en garantissant que leur distance mutuelle en direction radiale soit bien déterminée. En effet, la présence du ventilateur de l'alternateur non loin de ces éléments 14a, 14b après emmanchement de la pièce exige de positionner ces éléments de façon précise en direction radiale. Par ailleurs, l'anneau 34 permet de bien garantir l'absence de tout contact entre les éléments 14a, 14b et une partie élargie AR1 de l'arbre d'alternateur AR (voir figure 9), autour de laquelle l'anneau vient se positionner, notamment lors de phénomènes de dilatation dûs à l'échauffement ou de l'accumulation de poussières dans cette région de l'alternateur.

En outre, l'injection de la matière de surmoulage s'effectue préférentiellement au niveau de cet anneau, et en particulier au niveau des surépaisseurs 341.

En outre, les surfaces concaves 342 prévues latéralement et de façon diamétralement opposée servent à la préhension de la pièce par un robot en vue de l'emmanchement à force sur un arbre d'alternateur. Ainsi la pièce peut être saisie selon deux orientations possibles, décalées mutuellement de 180°, et l'on a indiqué plus haut comment les encoches 30, 30', 30'' permettaient d'assurer un détrompage pour choisir l'orientation qui convient pour alimenter le bobinage avec la polarité correcte.

On notera également que les décrochements 323a, 323b, qui font saillie radialement vers l'extérieur de la surface cylindrique définie par le cylindre 10 et son prolongement isolant 22, permettent lors du montage de la pièce sur certains alternateurs de définir une butée axiale pour un roulement à billes prévu entre l'arbre de l'alternateur et son carter pour constituer le palier arrière de l'alternateur.

Les figures 10 et 11 représentent une pièce telle que décrite ci-dessus montée respectivement sur deux alternateurs A de modèles différents. L'arbre de l'alternateur est désigné par AR, et un roulement pour cet arbre par R.

On comprend le rôle de l'anneau 34, qui évite tout "flottement" des éléments de connexion 14a, 14b et tout risque de court-circuit avec des parties relativement proches de l'alternateur.

On observe également qu'une plaque latérale P du roulement R est en butée contre les épaulements 323a, 323b définis par la pièce 1.

Bien entendu, la présente invention n'est nullement limitée à la forme de réalisation décrite ci-dessus et représentée sur les dessins, mais l'homme de l'art saura y apporter toute variante ou modification dans le cadre des revendications ci-jointes.

## Revendications

1. Combinaison d'un fil et d'un élément de connexion (14a, 14b) pour une extrémité du fil, du type comprenant un canal (17) pour ladite extrémité du fil (FB), défini entre deux pattes (15) situées en vis-à-vis et reliées l'une à l'autre par une partie de liaison (15') constituant le fond du canal, lesdites pattes étant destinées à être repliées l'une vers l'autre en vue ce pincer ladite extrémité du fil, au moins l'une des pattes (15) comportant au niveau d'au moins un bord latéral une encoche (16) caractérisée en ce que la ou chaque encoche s'étend à proximité de ladite partie de liaison (15') et est adaptée à recevoir une partie de l'extrémité du fil coudée à environ 180° afin de positionner le fil dans le canal, cette partie de l'extrémité du fil étant située entre une première partie de l'extrémité du fil s'étendant à l'intérieur du canal et une deuxième partie de l'extrémité du fil s'étendant à l'extérieur du canal.

2. Combinaison selon la revendication 1, caractérisée en ce que chacune des deux pattes (15) comporte une encoche (16).

3. Combinaison selon la revendication 1 ou 2, caractérisée en ce que la ou chaque encoche (16) est de forme semi-circulaire.

4. Combinaison selon l'une des revendications 1 à 3, caractérisée en ce que, ladite première partie de l'extrémité du fil terminant cette extrémité, ledit canal (17) est évasé d'un bord latéral des pattes (15) ne comportant pas d'encoche vers un bord latéral opposé desdites pattes, comportant la ou chaque encoche (16).

5. Combinaison selon l'une des revendications 1 à 4, caractérisé en ce que l'élément de connexion présente, en section transversale au canal (17), un profil en forme de "U".

6. Combinaison selon l'une des revendications 1 à 4, caractérisé en ce que chaque patte (15) comporte, sur sa face tournée vers l'intérieur du canal, un bossage (151).

7. Combinaison d'un fil et d'un conducteur rigide (123a, 123b) caractérisée en ce que le conducteur a une extrémité terminée par un élément de connexion combiné au fil selon l'une des revendications 1 à 6, et en ce que la ou chaque encoche (16) est tournée vers ledit conducteur rigide.

8. Collecteur rapporté pour alternateur notamment de véhicule automobile, du type réalisé par surmoulage de matière isolante sur des éléments électriquement conducteurs, et comprenant une première partie généralement cylindrique (10a, 10b, 20, 22) comportant à sa surface extérieure deux bagues collectrices (10a, 10b), une deuxième partie (34, 14a, 14b) comportant deux éléments de connexion avec les extrémités de fils (FB) d'un bobinage, et une partie intermédiaire (12a, 12b, 32a, 32b) de liaison électrique et mécanique entre les première et deuxième parties, comprenant deux bras constitués chacun d'une partie conductrice (12a, 12b) de liaison entre bague et élément de connexion noyée dans la matière isolante (32a, 32b), caractérisé en ce qu'il comprend deux combinaisons d'un fil et d'un élément de connexion selon l'une des revendications 1 à 6, ou deux combinaisons d'un fil et d'un conducteur rigide selon la revendication 7.

9. Alternateur (A) notamment pour véhicule automobile, caractérisé en ce qu'il comporte sur un arbre (AR) en saillie un collecteur rapporté (1) selon la revendication 8.

## Patentansprüche

1. Kombination eines Drahts und eines Anschlußelements (14a, 14b) für ein Drahtende, umfassend einen Kanal (17) für das besagte Drahtende (FB), der zwischen zwei gegenüberliegenden Ansätzen (15) ausgebildet ist, die durch einen Verbindungsteil (15') miteinander verbunden sind, der den Boden des Kanals bildet, wobei die besagten Ansätze dazu bestimmt sind, zueinander hin umgebogen zu werden, um das besagte Drahtende einzuklemmen, wobei mindestens einer der Ansätze (15) in Höhe mindestens einer Seitenkante eine Ausklinkung (16) enthält , **dadurch gekennzeichnet,** daß sich die bzw. jede Ausklinkung in der Nähe des besagten Verbindungsteils (15') erstreckt und in der Lage ist, einen um etwa 180° gebogenen Teil des Drahtendes aufzunehmen, um den Draht im Kanal zu positionieren, wobei dieser Teil des Drahtendes zwischen einem ersten Teil des Drahtendes, der sich im Innern des Kanals erstreckt, und einem zweiten Teil des Drahtendes angeordnet ist, der sich außerhalb des Kanals erstreckt.

2. Kombination nach Anspruch 1 , **dadurch gekennzeichnet**, daß jeder der beiden Ansätze (15) eine Ausklinkung (16) enthält.

3. Kombination nach Anspruch 1 oder 2, **dadurch gekennzeichnet,** daß die bzw. jede Ausklinkung (16) halbkreisförmig ausgebildet ist.

4. Kombination nach einem der Ansprüche 1 bis 3, **dadurch gekennzeichnet,** daß der besagte erste Teil des Drahtendes dieses Ende abschließt, wobei der besagte Kanal (17) von einer Seitenkante der Ansätze (15), die keine Ausklinkung enthält, zu einer gegenüberliegenden Seitenkante der besagten Ansätze, die die bzw. jede Ausklinkung (16) enthält, konisch erweitert ist.

5. Kombination nach einem der Ansprüche 1 bis 4, **dadurch gekennzeichnet,** daß das Anschlußelement im Querschnitt am Kanal (17) ein "U"-förmiges Profil aufweist.

6. Kombination nach einem der Ansprücbe 1 bis 4, **dadurch gekennzeichnet,** daß jeder Ansatz (15) auf seiner zum Innern des Kanals gerichteten Fläche einen Vorsprung (15) aufweist.

7. Kombination eines Drahts und eines starren Leiters (123a, 123b), **dadurch gekennzeichnet,** daß der Leiter ein Ende aufweist, das durch ein mit dem Draht kombiniertes Anschlußelement nach einem der Ansprüche 1 bis 6 abgeschlossen wird, und daß die bzw. jede Ausklinkung (16) zu dem besagten starren Leiter hin gerichtet ist.

8. Angebauter Kollektor für einen Wechselstromgenerator, hauptsächlich für Kraftfahrzeuge, der durch Aufformen von nichtleitendem Material auf elektrisch leitenden Elementen ausgeführt ist und einen allgemein zylindrischen ersten Teil (10a, 10b, 20, 22) mit zwei Schleifringen (10a, 10b) an seiner Außenfläche, einen zweiten Teil (34, 14a, 14b) mit zwei Anschlußelementen mit den Drahtenden (FB) einer Wicklung und einen Zwischenteil (12a, 12b, 32a, 32b) für die elektrische und mechanische Verbindung zwischen dem ersten und dem zweiten Teil enthält, der zwei Arme umfaßt, die jeweils aus einem leitenden Teil (12a, 12b) für die Verbindung zwischen Schleifring und Anschlußelement bestehen, der in das nichtleitende Material (32a, 32b) eingelassen ist , **dadurch gekennzeichnet,** daß er zwei Kombinationen eines Drahts und eines Anschlußelements nach einem der Ansprüche 1 bis 6 oder zwei Kombinationen eines Drahts und eines starren Leiters nach Anspruch 7 umfaßt.

9. Wechselstromgenerator (A), hauptsächlich für Kraftfahrzeuge, **dadurch gekennzeichnet,** daß er auf einer vorstehenden Welle (AR) einen angebauten Kollektor (1) nach Anspruch 8 umfaßt.

## Claims

1. A combination of a wire and a connexion element (14a, 14b) for an end of the wire, of the type comprising a channel (17) for said end of the wire (FB), defined between two tabs (15) situated facing each other and interconnected by a link portion (15') constituting the web of the channel, said tabs being designed to be folded towards each other in order to clamp said end of the wire, at least one of the tabs (15) including, in at least one lateral edge thereof, a notch (16), the combination being characterized in that, the or each, notch extends close to said link portion (15') and is adapted to receive a portion of the end of the wire that is bent through about 180° in order to position the wire in the channel, said portion of the end of the wire being situated between a first portion of the end of the wire extending inside the channel and a second portion of the end of the wire extending outside the channel.

2. A combination according to claim 1, characterized in that each of the two tabs (15) includes a notch (16).

3. A combination according to claim 1 or 2, characterized in that the, or each, notch (16) is semicircular in shape.

4. A combination according to any one of claims 1 to 3, characterized in that said first portion of the end of the wire terminates said end, with the channel (17) flaring from a side edge of each tab (15) that does not include a notch towards an opposite side edge of each said tabs that does include the, or each, notch (16).

5. A combination according to any one of claims 1 to 4, characterized in that the connexion element has a U-shaped profile in section across the channel (17).

6. A combination according to any one of claims 1 to 4, characterized in that each tab (15) includes a projection (151) on its face that faces towards the inside of the channel.

7. A combination of a wire and of a rigid conductor (123a, 123b), characterized in that the conductor has one end terminated by a connexion element combined with the wire according to any one to claims 1 to 6, and in that the, or each, notch (16) is directed towards said rigid conductor.

8. An add-on collector for an alternator, in particular for a motor vehicle, the collector being of the type made by overmolding an insulating material onto electrically conductive elements, and comprising a first generally cylindrical portion (10a, 10b, 20, 22) including two collector rings (10a, 10b) on its outside surface, a second portion (34, 14a, 14b) including two connexion elements for connection with the wire ends (FB) of a winding, and an intermediate portion (12a, 12b, 32a, 32b) for electrically and mechanically interconnecting the first and second portions, each comprising two arms constituted by a conductive link portion (12a, 12b) between the ring and the connexion element embedded in the insulating material (32a, 32b), characterized in that it comprises two combinations of a wire and a connexion element according to any one of claims 1 to 6, or two combinations of a wire and a rigid conductor according to claim 7.

9. An alternator (A), in particular for a motor vehicle, characterized in that it includes on a projecting shaft (AR) an add-on collector (1) according to claim 8.
